# EUROPÄISCHE PATENTSCHRIFT

(11) **EP 3 711 482 B1**
(45) Veröffentlichungstag und Bekanntmachung des Hinweises auf die Patenterteilung: **07.06.2023**
(21) Anmeldenummer: 20401019.3
(22) Anmeldetag: 11.03.2020
(51) Int. Cl.: A01M 7/00

(54) **VERFAHREN ZUM AUSBRINGEN VON MATERIAL AUF EINE LANDWIRTSCHAFTLICHE NUTZFLÄCHE**
METHOD FOR APPLYING MATERIAL TO AN AGRICULTURAL AREA
PROCÉDÉ D'ÉPANDAGE DE MATIÈRE SUR UNE SURFACE AGRICOLE

(30) Priorität: 19.03.2019 DE 102019106924
(43) Veröffentlichungstag der Anmeldung: 23.09.2020
(73) Patentinhaber: Amazonen-Werke H. Dreyer SE & Co. KG, 49205 Hasbergen (DE)
(72) Erfinder: Klemann, Timo, 49191 Belm (DE)

(56) Entgegenhaltungen:
- EP-A1- 3 014 993
- EP-A2- 2 153 710
- DE-A1-102014 115 551

## Beschreibung

Die Erfindung betrifft ein Verfahren zum Ausbringen von Material auf eine landwirtschaftliche Nutzfläche nach dem Oberbegriff des Patentanspruchs 1 und ein landwirtschaftliches Ausbringgerät nach dem Oberbegriff des Patentanspruchs 14.

Moderne landwirtschaftliche Ausbringgeräte, wie beispielsweise Düngerstreuer oder Feldspritzen, erfassen während des Ausbringvorgangs ihre Position auf der landwirtschaftlichen Nutzfläche. In Abhängigkeit der erfassten Position auf der landwirtschaftlichen Nutzfläche kann dann die Materialausbringung angepasst werden, beispielsweise um im Übergangsbereich zum Vorgewende unbeabsichtigte Mehrfachausbringungen und/oder unbeabsichtigte Ausbringlücken auf der landwirtschaftlichen Nutzfläche zu vermeiden.

Aus der Druckschrift DE 10 2014 103 787 A1 ist beispielsweise ein Verfahren zum Ausbringen von Pflanzenschutzmitteln bekannt, bei welchem die Betriebsweise der verwendeten Spritzeinrichtung in einem Nahbereich eines Gewässers angepasst wird, um das Gewässer nicht mit Pflanzenschutzmitteln zu belasten.

Ferner ist aus der Druckschrift EP 1 005 791 A2 ein Steuerungsgerät für eine landwirtschaftliche Ausbringmaschine bekannt, mittels welchem einzelne Ausbringteilbereiche des landwirtschaftlichen Ausbringgeräts während des Ausbringens von Material auf die landwirtschaftliche Nutzfläche automatisch aktiviert und deaktiviert werden können, um Mehrfachausbringungen und/oder Ausbringlücken auf der landwirtschaftlichen Nutzfläche zu vermeiden.

Die EP 3 014 993 A1 und die DE 10 2014 115 551 A1 offenbaren die Durchführung eines Ausbringvorgangs unter Verwendung virtueller Teilbreiten, die den realen Teilbreiten vorgelagert sind und zur vorausschauenden Durchführung von prozessvorbereitenden Vorgängen herangezogen werden.

Diese und andere bekannte Methoden zur Ausbringung von Material auf landwirtschaftliche Nutzflächen führen jedoch weiterhin zu unbeabsichtigten Mehrfachausbringungen und/oder Ausbringlücken auf der landwirtschaftlichen Nutzfläche. Insbesondere bei der Ausbringung von Pflanzenschutzmitteln oder Dünger führen die unbeabsichtigten Mehrfachausbringungen und/oder Ausbringlücken teilweise zu erheblichen Ertragsverlusten.

Die der Erfindung zugrundeliegende Aufgabe besteht somit darin, unbeabsichtigte Mehrfachausbringungen und/oder Ausbringlücken bei der Ausbringung von Material auf eine landwirtschaftliche Nutzfläche weiter zu verringern.

Die Aufgabe wird gelöst durch ein Verfahren mit den Merkmalen des Anspruchs 1.

Die Erfindung macht sich die Erkenntnis zunutze, dass das verwendete Positionssignal beim positionsabhängigen Deaktivieren einzelner Ausbringteilbereiche des landwirtschaftlichen Ausbringgeräts die Materialausbringung in erheblichem Maße beeinflusst. Wenn die Position des landwirtschaftlichen Ausbringgeräts lediglich mit einer geringen Genauigkeit erfasst wird, kann auch mit einer präzisen positionsabhängigen Anpassung der Materialausbringung keine Vermeidung unbeabsichtigter Mehrfachausbringungen und/oder Ausbringlücken erreicht werden. Vielmehr ist neben der erfassten Position auch die Erfassungsgenauigkeit beim Deaktivieren einzelner Ausbringteilbereiche des landwirtschaftlichen Ausbringgeräts während des Ausbringvorgangs zu berücksichtigen. Außerdem hat der aktuelle fahrdynamische Zustand des landwirtschaftlichen Ausbringgeräts einen erheblichen Einfluss auf die Materialausbringung. Durch die Berücksichtigung des fahrdynamischen Zustands des Ausbringgeräts kann eine vorausschauende Steuerung der Materialausbringung erfolgen. Insbesondere bei Kurvenfahrten und bei Geschwindigkeitsänderungen führt die Schaltungsträgheit in der Ausbringmechanik des landwirtschaftlichen Ausbringgeräts beim Deaktivieren oder Aktivieren einzelner Ausbringteilbereiche zu unbeabsichtigten Ausbringergebnissen. Beispielsweise sind die Reaktionszeiten von Ventilen in einigen fahrdynamischen Zuständen bei der Ausbringung von Material zu berücksichtigen, um die Materialausbringung vorausschauend steuern zu können. Durch eine solche vorausschauende Steuerung der Materialausbringung kann dann das gewünschte Ausbringergebnis erzielt werden. Insgesamt kann durch die Berücksichtigung der Genauigkeit der Positionserfassung und/oder des aktuellen fahrdynamischen Zustands des landwirtschaftlichen Ausbringgeräts eine wesentlich präzisere Deaktivierung von Ausbringteilbereichen des landwirtschaftlichen Ausbringgeräts erfolgen, sodass unbeabsichtigte Mehrfachausbringungen und/oder Ausbringlücken auf der landwirtschaftlichen Nutzfläche erheblich reduziert oder sogar vermieden werden können.

Vorzugsweise umfasst das Verfahren das Bestimmen der Genauigkeit erfasster Positionen des landwirtschaftlichen Ausbringgeräts. Insbesondere erfolgt das Erfassen der Position des landwirtschaftlichen Ausbringgeräts während des Ausbringens von Material mittels eines satellitengestützten Positionserfassungssystems. Das satellitengestützte Positionserfassungssystem kann beispielsweise eine Ortungsantenne umfassen, welche an dem landwirtschaftlichen Ausbringgerät angeordnet ist. Vorzugsweise erfolgt das Erfassen der Position des landwirtschaftlichen Ausbringgeräts über GPS. Vorzugsweise umfasst das Erfassen der Position des landwirtschaftlichen Ausbringgeräts während des Ausbringens von Material das Empfangen von Satellitensignalen durch das landwirtschaftliche Ausbringgerät. Die Genauigkeit erfasster Positionen kann beispielsweise von der Anzahl der Satelliten, von welchen Satellitensignale empfangen werden, und/oder deren Konstellation abhängen. Ferner kann die Genauigkeit erfasster Positionen beispielsweise von der Signalqualität der empfangenen Satellitensignale abhängen. Außerdem kann die Genauigkeit erfasster Positionen beispielsweise von der Position einer Ortungsantenne, welche zur Positionserfassung genutzt wird, abhängen. Bei einer vergleichsweise hohen Anordnung der Ortungsantenne an dem landwirtschaftlichen Ausbringgerät führt eine Neigung des landwirtschaftlichen Ausbringgeräts zu einer ungenauen Positionserfassung, da die Projektion der landwirtschaftlichen Ortungsantenne auf die landwirtschaftliche Nutzfläche zu einem Positionsversatz führt.

Das landwirtschaftliche Ausbringgerät verfügt vorzugsweise über eine Teilbreitenschaltung. Die Deaktivierungszeitpunkte der einzelnen Ausbringteilbereiche sind vorzugsweise außerdem von einer erfassten Position des landwirtschaftlichen Ausbringgeräts während des Ausbringens von Material auf die landwirtschaftliche Nutzfläche abhängig. Das landwirtschaftliche Ausbringgerät kann ein landwirtschaftliches Streugerät, beispielsweise ein Düngerstreuer sein. Das landwirtschaftliche Ausbringgerät kann alternativ ein landwirtschaftliches Spritzgerät, beispielsweise eine Feldspritze sein. Bei einem landwirtschaftlichen Spritzgerät wird die Teilbreitenschaltung vorzugsweise über eine Einzeldüsenschaltung umgesetzt. Alternativ kann das landwirtschaftliche Ausbringgerät eine landwirtschaftliche Sämaschine sein.

In einer bevorzugten Ausführungsform des erfindungsgemäßen Verfahrens erfolgt das Erfassen der Position des landwirtschaftlichen Ausbringgeräts während des Ausbringens von Material auf einen ersten Flächenbereich der landwirtschaftlichen Nutzfläche und/oder während des Ausbringens von Material auf einen zweiten Flächenbereich der landwirtschaftlichen Nutzfläche, welcher an den ersten Flächenbereich angrenzt. Der erste Flächenbereich der landwirtschaftlichen Nutzfläche kann beispielsweise im Vorgewende liegen. Der zweite Flächenbereich der landwirtschaftlichen Nutzfläche kann im Innenbereich der landwirtschaftlichen Nutzfläche außerhalb des Vorgewendes liegen. Vorzugsweise erfolgt das Deaktivieren der einzelnen Ausbringteilbereiche des landwirtschaftlichen Ausbringgeräts während des Ausbringens von Material auf den ersten Flächenbereich und/oder den zweiten Flächenbereich der landwirtschaftlichen Nutzfläche zur Vermeidung unbeabsichtigter Mehrfachausbringungen und/oder Ausbringlücken im Grenzbereich zwischen dem ersten Flächenbereich und dem zweiten Flächenbereich der landwirtschaftlichen Nutzfläche. Somit werden Mehrfachausbringungen und/oder Ausbringlücken beispielsweise im Übergangsbereich zum Vorgewende vermieden. Die Deaktivierungszeitpunkte der einzelnen Ausbringteilbereiche sind vorzugsweise von der Genauigkeit erfasster Positionen des landwirtschaftlichen Ausbringgeräts während des Ausbringens von Material auf den ersten Flächenbereich und/oder den zweiten Flächenbereich der landwirtschaftlichen Nutzfläche abhängig. Somit kann beispielsweise bei der Ausbringung von Material auf den zweiten Flächenbereich der landwirtschaftlichen Nutzfläche, welcher an den ersten Flächenbereich der landwirtschaftlichen Nutzfläche angrenzt, die Genauigkeit bei der Materialausbringung auf den ersten Flächenbereich berücksichtigt werden. Wenn die erfassten Positionen beim Ausbringen von Material auf den ersten Flächenbereich bereits ungenau erfasst worden sind, kann dies bei der Ausbringung von Material auf den zweiten Flächenbereich zur Vermeidung von Mehrfachausbringungen und/oder Ausbringlücken berücksichtigt werden. Zusätzlich kann hierbei die aktuelle Positionserfassungsgenauigkeit berücksichtigt werden. Die Deaktivierungszeitpunkte der einzelnen Ausbringteilbereiche sind vorzugsweise außerdem von einer erfassten Position des landwirtschaftlichen Ausbringgeräts während des Ausbringens von Material auf den ersten Flächenbereich oder den zweiten Flächenbereich der landwirtschaftlichen Nutzfläche abhängig.

In einer bevorzugten Ausführungsform des erfindungsgemäßen Verfahrens erfolgt ein Aktivieren einzelner Ausbringteilbereiche des landwirtschaftlichen Ausbringgeräts während des Ausbringens von Material auf die landwirtschaftliche Nutzfläche zur Vermeidung unbeabsichtigter Mehrfachausbringungen und/oder Ausbringlücken auf der landwirtschaftlichen Nutzfläche. Die Aktivierungszeitpunkte der einzelnen Ausbringteilbereiche sind dabei von der Genauigkeit erfasster Positionen des landwirtschaftlichen Ausbringgeräts während des Ausbringens von Material auf die landwirtschaftliche Nutzfläche und/oder von einem aktuellen fahrdynamischen Zustand des landwirtschaftlichen Ausbringgeräts abhängig. Neben der Deaktivierung einzelner Ausbringteilbereiche ist auch die Aktivierung einzelner Ausbringteilbereiche entsprechend präzise vorzunehmen, damit Mehrfachausbringungen und/oder Ausbringlücken auf der landwirtschaftlichen Nutzfläche vermieden werden. Die Aktivierungszeitpunkte der einzelnen Ausbringteilbereiche sind vorzugsweise außerdem von einer erfassten Position des landwirtschaftlichen Ausbringgeräts während des Ausbringens von Material auf die landwirtschaftliche Nutzfläche abhängig.

In einer anderen bevorzugten Ausführungsform des erfindungsgemäßen Verfahrens erfolgt das Aktivieren der einzelnen Ausbringteilbereiche des landwirtschaftlichen Ausbringgeräts während des Ausbringens von Material auf einen ersten Flächenbereich und/oder einen zweiten Flächenbereich der landwirtschaftlichen Nutzfläche zur Vermeidung unbeabsichtigter Mehrfachausbringungen und/oder Ausbringlücken im Grenzbereich zwischen dem ersten Flächenbereich und dem zweiten Flächenbereich der landwirtschaftlichen Nutzfläche. Die Aktivierungszeitpunkte der einzelnen Ausbringteilbereiche sind vorzugsweise von der Genauigkeit erfasster Positionen des landwirtschaftlichen Ausbringgeräts während des Ausbringens von Material auf den ersten Flächenbereich und/oder den zweiten Flächenbereich der landwirtschaftlichen Nutzfläche abhängig. Die Aktivierungszeitpunkte der einzelnen Ausbringteilbereiche sind vorzugsweise außerdem von einer erfassten Position des landwirtschaftlichen Ausbringgeräts während des Ausbringens von Material auf den ersten Flächenbereich und/oder den zweiten Flächenbereich der landwirtschaftlichen Nutzfläche abhängig.

In einer alternativen Ausführungsform des erfindungsgemäßen Verfahrens wird der aktuelle fahrdynamische Zustand des landwirtschaftlichen Ausbringgeräts erfasst, vorzugsweise durch einen oder mehrere Sensoren des landwirtschaftlichen Ausbringgeräts. Das Erfassen des aktuellen fahrdynamischen Zustands des landwirtschaftlichen Ausbringgeräts kann das Erfassen des aktuellen längsdynamischen Zustands und/oder das Erfassen des aktuellen querdynamischen Zustands des landwirtschaftlichen Ausbringgeräts umfassen. Das Erfassen des aktuellen längsdynamischen Zustands erfolgt beispielsweise durch Erfassen einer Fahrgeschwindigkeit des landwirtschaftlichen Ausbringgeräts in Längsrichtung und/oder einer Beschleunigung des landwirtschaftlichen Ausbringgeräts in Längsrichtung. Das Erfassen des aktuellen querdynamischen Zustands erfolgt vorzugsweise durch Erfassen einer Gierrate und/oder einer Gierbeschleunigung des landwirtschaftlichen Ausbringgeräts um eine Hochachse, einer Geschwindigkeit des landwirtschaftlichen Ausbringgeräts in Querrichtung und/oder einer Beschleunigung des landwirtschaftlichen Ausbringgeräts in Querrichtung. Die hierzu verwendeten Sensoren können beispielsweise Geschwindigkeits-, Beschleunigungs- oder Gierratensensoren sein.

Im erfindungsgemäßen Verfahren erfolgt das Ermitteln der Deaktivierungszeitpunkte, und optional das Ermitteln der Aktivierungszeitpunkte, der einzelnen Ausbringteilbereiche unter Berücksichtigung zumindest eines Toleranzwertes. Der Toleranzwert definiert ein tolerierbares Ausmaß von Mehrfachausbringungen oder Ausbringlücken auf der landwirtschaftlichen Nutzfläche. Vorzugsweise ist der zumindest eine Toleranzwert von der Genauigkeit erfasster Positionen des landwirtschaftlichen Ausbringgeräts während des Ausbringens von Material auf die landwirtschaftliche Nutzfläche, insbesondere auf den ersten Flächenbereich und/oder den zweiten Flächenbereich der landwirtschaftlichen Nutzfläche, abhängig. Der Toleranzwert kann sich auf eine Überlappungstoleranz beziehen. Alternativ kann sich der Toleranzwert auch auf eine Lückentoleranz beziehen. Die Toleranzwerte unterschiedlicher Bereiche der landwirtschaftlichen Nutzfläche können sich voneinander unterscheiden, wobei die Toleranzwertunterschiede von den Genauigkeitsunterschieden bei der Positionserfassung des landwirtschaftlichen Ausbringgeräts abhängig sein können.

In einer weiteren bevorzugten Ausführungsform des erfindungsgemäßen Verfahrens werden die Positionen der einzelnen Ausbringteilbereiche des landwirtschaftlichen Ausbringgeräts während des Ausbringens von Material auf die landwirtschaftliche Nutzfläche ermittelt. Die Deaktivierungszeitpunkte und/oder die Aktivierungszeitpunkte der einzelnen Ausbringteilbereiche sind vorzugsweise von den ermittelten Positionen der einzelnen Ausbringteilbereiche des landwirtschaftlichen Ausbringgeräts während des Ausbringens von Material auf die landwirtschaftliche Nutzfläche abhängig. Insbesondere bei der Materialausbringung während einer Kurvenfahrt ist es notwendig, die Aktivierung und Deaktivierung auf die einzelnen Positionen der Ausbringteilbereiche des landwirtschaftlichen Ausbringgeräts abzustimmen. Das Ermitteln der Positionen der einzelnen Ausbringteilbereiche des landwirtschaftlichen Ausbringgeräts während des Ausbringens von Material kann durch eine Berechnung erfolgen, welche auf der erfassten Position des landwirtschaftlichen Ausbringgeräts während des Ausbringens von Material und/oder auf der Gerätegeometrie des landwirtschaftlichen Ausbringgeräts basiert. Insbesondere ist hierbei auch die Positionierung einer Ortungsantenne zu berücksichtigen. Die Ortungsantenne kann eine Empfangsantenne für Satellitensignale sein. Wenn das landwirtschaftliche Ausbringgerät als landwirtschaftliches Spritzgerät ausgebildet ist, können die Positionen der einzelnen Ausbringteilbereiche über die Positionierung der Spritzdüsen am Spritzgestänge berechnet werden. Über einen berechneten Bewegungspfad der Spritzdüsen während einer Kurvenfahrt sind während der Kurvenfahrt auch die Positionen der einzelnen Ausbringteilbereiche bekannt, sodass die Positionen der einzelnen Ausbringteilbereiche beim Ermitteln der Deaktivierungszeitpunkte und/oder der Aktivierungszeitpunkte der einzelnen Ausbringteilbereiche berücksichtigt werden können.

In einer weiteren bevorzugten Ausführungsform des erfindungsgemäßen Verfahrens erfolgt das Ermitteln der Positionen der einzelnen Ausbringteilbereiche des landwirtschaftlichen Ausbringgeräts während des Ausbringens von Material auf den ersten Flächenbereich und/oder den zweiten Flächenbereich der landwirtschaftlichen Nutzfläche. Alternativ oder zusätzlich sind die Deaktivierungszeitpunkte und/oder die Aktivierungszeitpunkte der einzelnen Ausbringteilbereiche von ermittelten Positionen der einzelnen Ausbringteilbereiche des landwirtschaftlichen Ausbringgeräts während des Ausbringens von Material auf den ersten Flächenbereich und/oder den zweiten Flächenbereich der landwirtschaftlichen Nutzfläche abhängig. Somit kann beispielsweise der Verlauf der Vorgewendeflächen ermittelt werden, sodass beim Ausbringen von Material im Feldinneren eine entsprechende Aktivierung bzw. Deaktivierung einzelner Ausbringteilbereiche im Übergangsbereich zum Vorgewende erfolgen kann.

Darüber hinaus ist ein erfindungsgemäßes Verfahren vorteilhaft, bei welchem die Deaktivierungs- und/oder die Aktivierungszeitpunkte der einzelnen Ausbringteilbereiche außerdem von der Genauigkeit ermittelter Positionen der einzelnen Ausbringteilbereiche des landwirtschaftlichen Ausbringgeräts während des Ausbringens von Material auf die landwirtschaftliche Nutzfläche abhängig sind. Vorzugsweise umfasst das Verfahren das Bestimmten der Genauigkeit ermittelter Positionen der einzelnen Ausbringteilbereiche des landwirtschaftlichen Ausbringgeräts. Die Positionsermittlung der einzelnen Ausbringteilbereiche kann dabei mit unterschiedlichen Genauigkeiten erfolgen. Beispielsweise können bei einem Spritzgestänge innenliegende Ausbringteilbereiche mit einer höheren Genauigkeit bestimmt werden als die Positionen außenliegender Ausbringteilbereiche, da beispielsweise die Gestängeschwingungen der außerliegenden Gestängesegmente stärker sind als die Gestängeschwingungen der innenliegenden Gestängesegmente. Die Gestängeschwingungen führen dazu, dass die Positionen entsprechender Ausbringteilbereiche lediglich mit einer verminderten Genauigkeit bestimmt werden können. Die Genauigkeit der ermittelten Positionen der einzelnen Ausbringteilbereiche während des Ausbringens von Material hängt zunächst auch von der Genauigkeit der erfassten Position des landwirtschaftlichen Ausbringgeräts während des Ausbringens von Material ab. Eine vorhandene Ungenauigkeit hinsichtlich der Geräteposition würde bei einer auf einer Berechnung basierenden Positionsbestimmung der einzelnen Ausbringteilbereiche auf die einzelnen Ausbringteilbereiche übertragen werden. Ferner kann die Längs- und/oder Querdynamik des landwirtschaftlichen Ausbringgeräts, insbesondere bei Kurvenfahrten, Auswirkungen auf die Genauigkeit der ermittelten Position der einzelnen Ausbringteilbereiche haben. Ferner kann das Schwingungsverhalten des landwirtschaftlichen Ausbringgeräts, insbesondere bei Kurvenfahrten, Geschwindigkeitsänderungen und/oder beim Überfahren von Bodenunebenheiten, beispielsweise Bodenfurchen, Auswirkungen auf die Genauigkeit der ermittelten Positionen der einzelnen Ausbringteilbereiche haben. Ferner kann die Gestängeneigung, insbesondere bei Kurvenfahrten, Auswirkungen auf die Genauigkeit der ermittelten Position der einzelnen Ausbringteilbereiche haben. Bei Kurvenfahrten kann das Spritzgestänge abhängig von der Gerätekonstruktion beispielsweise auf der Kurveninnenseite nach oben oder nach unten kippen. Ferner kann das Spritzgestänge während der Kurvenfahrt oder aufgrund von Geschwindigkeitsänderungen in Schwingung versetzt werden. Vorzugsweise ist der zumindest eine Toleranzwert, welcher das tolerierbare Ausmaß von Mehrfachausbringungen und/oder Ausbringlücken auf der landwirtschaftlichen Nutzfläche definiert, von der Genauigkeit der ermittelten Positionen der einzelnen Ausbringteilbereiche des landwirtschaftlichen Ausbringgeräts während des Ausbringens von Material auf die landwirtschaftliche Nutzfläche abhängig.

In einer weiteren bevorzugten Ausführungsform des erfindungsgemäßen Verfahrens sind die Deaktivierungszeitpunkte und/oder Aktivierungszeitpunkte der einzelnen Ausbringteilbereiche von der Genauigkeit der ermittelten Positionen der einzelnen Ausbringteilbereiche des landwirtschaftlichen Ausbringgeräts während des Ausbringens von Material auf den ersten Flächenbereich und/oder den zweiten Flächenbereich der landwirtschaftlichen Nutzfläche abhängig. Vorzugsweise ist der zumindest eine Toleranzwert, welcher das tolerierbare Ausmaß von Mehrfachausbringungen oder Ausbringlücken auf der landwirtschaftlichen Nutzfläche definiert, von der Genauigkeit der ermittelten Positionen der einzelnen Ausbringteilbereiche des landwirtschaftlichen Ausbringgeräts während des Ausbringens von Material auf den ersten Flächenbereich und/oder den zweiten Flächenbereich der landwirtschaftlichen Nutzfläche abhängig.

In einer anderen bevorzugten Ausführungsform des erfindungsgemäßen Verfahrens sind die Deaktivierungszeitpunkte und/oder die Aktivierungszeitpunkte der einzelnen Ausbringteilbereiche von der Deaktivierungsträgheit und/oder Aktivierungsträgheit des landwirtschaftlichen Ausbringgeräts abhängig. Die Deaktivierungsträgheit und/oder die Aktivierungsträgheit des landwirtschaftlichen Ausbringgeräts beschreibt die Verzögerung zwischen der steuerungstechnischen Veranlassung des Deaktivierens bzw. Aktivierens einzelner Ausbringteilbereiche des landwirtschaftlichen Ausbringgeräts und deren tatsächliche Aktivierung bzw. Deaktivierung. Bei landwirtschaftlichen Spritzgeräten sind hier beispielsweise die Reaktionszeiten der eingesetzten Ventile zu berücksichtigen. Vorzugsweise ist der zumindest eine Toleranzwert, welcher das tolerierbare Ausmaß von Mehrfachausbringungen und/oder Ausbringlücken auf der landwirtschaftlichen Nutzfläche definiert, von der Deaktivierungsträgheit und/oder der Aktivierungsträgheit des landwirtschaftlichen Ausbringgeräts abhängig.

Die der Erfindung zugrundeliegende Aufgabe wird ferner durch ein landwirtschaftliches Ausbringgerät der eingangs genannten Art gelöst, wobei das erfindungsgemäße landwirtschaftliche Ausbringgerät eine Steuerungseinrichtung aufweist, welche dazu eingerichtet ist, die Deaktivierungszeitpunkte der einzelnen Ausbringteilbereiche in Abhängigkeit der Genauigkeit erfasster Positionen des landwirtschaftlichen Ausbringgeräts während des Ausbringens von Material auf der landwirtschaftlichen Nutzfläche und/oder in Abhängigkeit von einem aktuellen fahrdynamischen Zustand des landwirtschaftlichen Ausbringgeräts zu ermitteln.

In erfindungsgemäßer Ausführungsform des landwirtschaftlichen Ausbringgeräts ist dieses dazu eingerichtet, das Verfahren zum Ausbringen von Material auf eine landwirtschaftliche Nutzfläche nach einer der vorstehend beschriebenen Ausführungsformen auszuführen. Hinsichtlich der Vorteile und Modifikationen des erfindungsgemäßen landwirtschaftlichen Ausbringgeräts wird auf die Vorteile und Modifikationen des erfindungsgemäßen Verfahrens zum Ausbringen von Material auf eine landwirtschaftliche Nutzfläche verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein erfindungsgemäßes landwirtschaftliches Ausbringgerät während des Ausführens des erfindungsgemäßen Verfahrens zu einem ersten Zeitpunkt;
- Fig. 2: das in der Fig. 1 dargestellte landwirtschaftliche Ausbringgerät während des Ausführens des erfindungsgemäßen Verfahrens zu einem späteren zweiten Zeitpunkt;
- Fig. 3: ein erfindungsgemäßes landwirtschaftliches Ausbringgerät während des Ausführens des erfindungsgemäßen Verfahrens zu einem ersten Zeitpunkt; und
- Fig. 4: das in der Fig. 3 dargestellte landwirtschaftliche Ausbringgerät während des Ausführens des erfindungsgemäßen Verfahrens zu einem späteren zweiten Zeitpunkt.

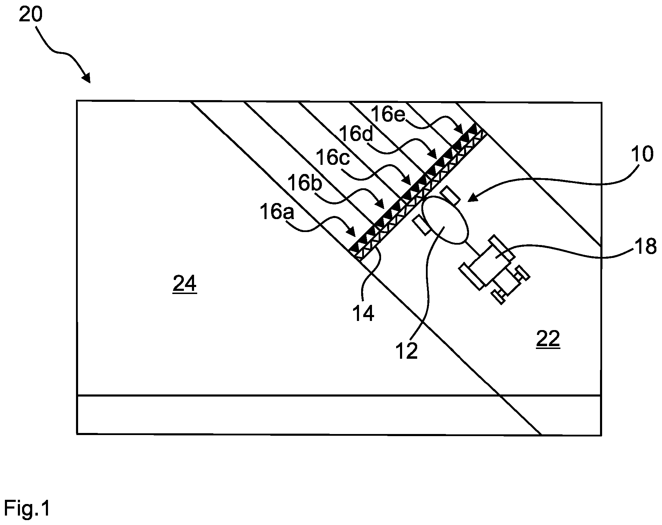

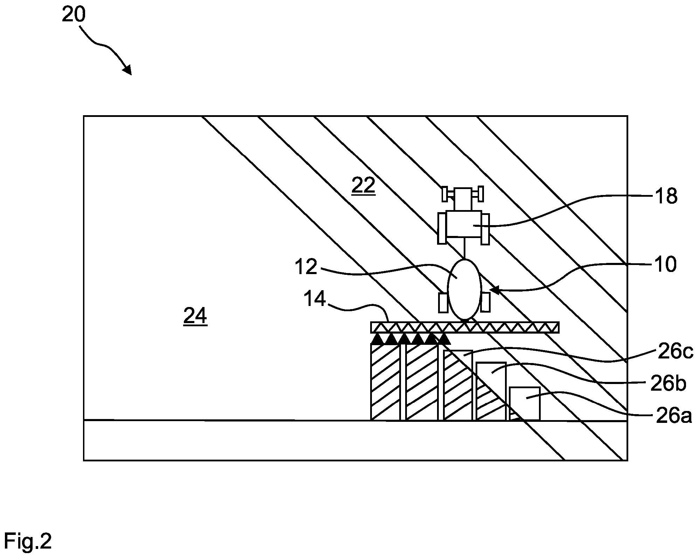

Die Fig. 1 und 2 zeigen ein als landwirtschaftliches Spritzgerät ausgebildetes Ausbringgerät 10 während der Ausbringung von Material auf eine landwirtschaftliche Nutzfläche 20. Bei dem Material handelt es sich um eine Spritzflüssigkeit, welche Pflanzenschutzmittel beinhaltet.

Das landwirtschaftliche Ausbringgerät 10 weist einen Vorratstank 12 auf, innerhalb welchem die auszubringende Spritzflüssigkeit bevorratet wird. An angeordnete Ausbringelemente befestigt, wobei die Ausbringelemente als Spritzdüsen ausgebildet sind. Die Spritzdüsen des landwirtschaftlichen Ausbringgeräts 10 sind einzeln und unabhängig voneinander ansteuerbar, sodass das landwirtschaftliche Ausbringgerät 10 über eine Teilbereichsschaltung verfügt. Über die Teilbereichsschaltung können einzelne Ausbringteilbereiche 16a-16e während des Ausbringens der Spritzflüssigkeit auf die landwirtschaftliche Nutzfläche 20 wahlweise aktiviert oder deaktiviert werden, um unbeabsichtigte Mehrfachausbringungen 26a-26c und/oder Ausbringlücken 28a-28c auf der landwirtschaftlichen Nutzfläche 20 zu vermeiden. Vorliegend wird die Teilbereichsschaltung des landwirtschaftlichen Ausbringgeräts 10 derart gesteuert, dass Ausbringlücken 28a-28c vermieden werden. Mehrfachausbringungen 26a-26c werden hingegen toleriert.

Ferner weist das landwirtschaftliche Ausbringgerät 10 eine Positionserfassungseinrichtung auf, mittels welcher die Position des landwirtschaftlichen Ausbringgeräts 10 während des Ausbringens der Spritzflüssigkeit auf die landwirtschaftliche Nutzfläche 20 erfasst werden kann. Die Positionserfassungseinrichtung ist Bestandteil eines satellitengestützten Positionserfassungssystems, welches eine Positionserfassung über GPS ermöglicht. Hierzu umfasst die Positionserfassungseinrichtung eine Empfangsantenne, über welche das landwirtschaftliche Ausbringgerät 10 während des Ausbringens der Spritzflüssigkeit Satellitensignale empfangen kann.

Das landwirtschaftliche Ausbringgerät 10 wird von einem als Traktor ausgebildeten Zugfahrzeug 18 gezogen. Alternativ kann das landwirtschaftliche Ausbringgerät 10 jedoch auch als Anbau- oder Aufbauspritze ausgebildet sein. Ferner kann das landwirtschaftliche Ausbringgerät 10 auch als selbstfahrende Spritze ausgebildet sein.

Die landwirtschaftliche Nutzfläche 20 umfasst einen ersten Flächenbereich 22 und einen zweiten Flächenbereich 24. Bei dem ersten Flächenbereich 22 handelt es sich um das Vorgewende der landwirtschaftlichen Nutzfläche 20. Bei dem zweiten Flächenbereich 24 handelt es sich um den Innenbereich der landwirtschaftlichen Nutzfläche 20, welcher von dem Vorgewende umschlossen wird.

Bei der in der Fig. 1 dargestellten Situation erfolgt die Ausbringung von Spritzflüssigkeit auf den ersten Flächenbereich 22 der landwirtschaftlichen Nutzfläche 20. Während des Ausbringens der Spritzflüssigkeit auf den ersten Flächenbereich 22 der landwirtschaftlichen Nutzfläche 20 erfolgt das Erfassen der Position des landwirtschaftlichen Ausbringgeräts 10. Ferner wird die Genauigkeit der erfassten Position des landwirtschaftlichen Ausbringgeräts 10 während des Ausbringens von Material auf den ersten Flächenbereich 22 der landwirtschaftlichen Nutzfläche 20 bestimmt. Die Genauigkeit der erfassten Positionen kann beispielsweise von der Anzahl der Satelliten, von welchen Satellitensignale empfangen werden, und/oder deren Konstellation abhängen. Außerdem kann die Genauigkeit erfasster Positionen beispielsweise von der Signalqualität der erfassten Satellitensignale abhängen.

Neben der Position des landwirtschaftlichen Ausbringgeräts 10 werden außerdem die Positionen der einzelnen Ausbringteilbereiche 16a-16e des landwirtschaftlichen Ausbringgeräts 10 während des Ausbringens von Material auf den ersten Flächenbereich 22 der landwirtschaftlichen Nutzfläche 20 ermittelt. Das Ermitteln der Positionen der einzelnen Ausbringteilbereiche 16a-16e des landwirtschaftlichen Ausbringgeräts 10 erfolgt dabei durch eine Berechnung, welche auf der erfassten Position des landwirtschaftlichen Ausbringgeräts 10 während des Ausbringens von Material auf den ersten Flächenbereich 22 der landwirtschaftlichen Nutzfläche 20 und der Gerätegeometrie basiert. Die Berechnung erfolgt dabei unter Berücksichtigung der Positionierung der GPS-Empfangsantenne des landwirtschaftlichen Ausbringgeräts 10 und der Positionen der Spritzdüsen an dem Spritzgestänge 14 des landwirtschaftlichen Ausbringgeräts 10.

Nach dem Überfahren des Vorgewendes liegen somit Positionsinformationen zum Verlauf der einzelnen Ausbringteilbereiche 16a-16e vor. Ferner liegen Informationen zu der Genauigkeit der erfassten Positionen vor.

In der Fig. 2 wird die Ausbringung der Spritzflüssigkeit auf den Flächenbereich 24 der landwirtschaftlichen Nutzfläche 20 dargestellt, wobei die Ausbringung von Spritzflüssigkeit auf den ersten Flächenbereich 20 der landwirtschaftlichen Nutzfläche bereits abgeschlossen ist.

Während des Ausbringens von Material auf den zweiten Flächenbereich 24 der landwirtschaftlichen Nutzfläche 20 wird ebenfalls die Position des landwirtschaftlichen Ausbringgeräts 10 erfasst. Gleichzeitig wird die Genauigkeit der erfassten Positionen des landwirtschaftlichen Ausbringgeräts 10 bestimmt. Über eine die Gerätegeometrie berücksichtigende Berechnung werden außerdem die Positionen der einzelnen Ausbringteilbereiche 16a-16e während des Ausbringens von Material auf den zweiten Flächenbereich 24 der landwirtschaftlichen Nutzfläche 20 ermittelt.

Das landwirtschaftliche Ausbringgerät 10 weist eine Steuerungseinrichtung auf, welche dazu eingerichtet ist, die Deaktivierungszeitpunkte der einzelnen Ausbringteilbereiche 16a-16e in Abhängigkeit der Genauigkeit der erfassten Positionen des landwirtschaftlichen Ausbringgeräts 10 während des Ausbringens der Spritzflüssigkeit auf die landwirtschaftliche Nutzfläche derart zu ermitteln, dass unbeabsichtigte Ausbringlücken 28a-28c vermieden werden, wobei Mehrfachausbringungen 26a-26c toleriert werden. Die Deaktivierungszeitpunkte der einzelnen Ausbringteilbereiche 16a-16e sind dabei von der Genauigkeit erfasster Positionen des landwirtschaftlichen Ausbringgeräts 10 während des Ausbringens von Material auf den ersten Flächenbereich 22 und den zweiten Flächenbereich 24 der landwirtschaftlichen Nutzfläche 20 abhängig. Somit werden sowohl Ungenauigkeiten bei der Positionserfassung im Vorgewende als auch Ungenauigkeiten bei der Positionserfassung im Innenbereich der landwirtschaftlichen Nutzfläche 20 beim Ansteuern der Spritzdüsen des landwirtschaftlichen Ausbringgeräts 10 berücksichtigt. Somit können unbeabsichtigte Ausbringlücken 28a-28c besonders wirksam vermieden werden.

Das Aktivieren der einzelnen Ausbringteilbereiche 16a-16e bei der nachfolgenden Anschlussfahrt in der benachbarten Fahrgasse erfolgt dabei ebenfalls derart, dass unbeabsichtigte Ausbringlücken 28a-28c im Grenzbereich zwischen dem ersten Flächenbereich 22 und dem zweiten Flächenbereich 24 der landwirtschaftlichen Nutzfläche 20 vermieden werden. Hierzu werden die Aktivierungszeitpunkte der einzelnen Ausbringteilbereiche 16a-16e in Abhängigkeit der Genauigkeit erfasster Positionen des landwirtschaftlichen Ausbringgeräts 10 während des Ausbringens von Material auf den ersten Flächenbereich 22 und den zweiten Flächenbereich 24 der landwirtschaftlichen Nutzfläche 20 ermittelt.

Die Deaktivierungszeitpunkte und die Aktivierungszeitpunkte der einzelnen Ausbringteilbereiche 16a-16e sind außerdem abhängig von einem aktuellen fahrdynamischen Zustand des landwirtschaftlichen Ausbringgeräts 10 und von der Deaktivierungsträgheit und Aktivierungsträgheit des landwirtschaftlichen Ausbringgeräts 10. Die Deaktivierungsträgheit und die Aktivierungsträgheit des landwirtschaftlichen Ausbringgeräts 10 beschreiben die Verzögerung zwischen der steuerungstechnischen Veranlassung des Deaktivierens bzw. Aktivierens einzelner Ausbringteilbereiche 16a-16e des landwirtschaftlichen Ausbringgeräts 10 und deren tatsächlicher Aktivierung bzw. Deaktivierung. Insbesondere bei Geschwindigkeits- oder Richtungsänderungen des landwirtschaftlichen Ausbringgeräts 10 kann die Aktivierungsträgheit bzw. die Deaktivierungsträgheit einen erheblichen Einfluss auf die Ausbringung der Spritzflüssigkeit haben. Entsprechende Geschwindigkeits- oder Richtungsänderungen können beispielsweise durch Geschwindigkeits-, Beschleunigungs- oder Gierratensensoren des landwirtschaftlichen Ausbringgeräts 10 erfasst werden.

Ferner kann auch der querdynamische Zustand des landwirtschaftlichen Ausbringgeräts 10 einen erheblichen Einfluss auf die Ausbringung der Spritzflüssigkeit haben. Dies gilt insbesondere bei einer Ausbringung von Spritzflüssigkeit während einer Kurvenfahrt. Bei einer Kurvenfahrt kann es auch zu einer Änderung der Bewegungsrichtung einzelner Gestängeabschnitte kommen. Beispielsweise kann sich ein kurveninnerer Gestängeabschnitt entgegen der Fahrtrichtung nach hinten bewegen. Auch dieser Aspekt wird bei der Ermittlung der Deaktivierungszeitpunkte bzw. der Aktivierungszeitpunkte in Abhängigkeit des aktuellen fahrdynamischen Zustands des landwirtschaftlichen Ausbringgeräts 10 berücksichtigt. Ferner können Gestängeschwingungen die Ausbringung der Spritzflüssigkeit verändern. Vorzugsweise werden auch die Gestängeschwingungen beim Ermitteln der Deaktivierungszeitpunkte bzw. der Aktivierungszeitpunkte der einzelnen Ausbringteilbereiche 16a-16e berücksichtigt.

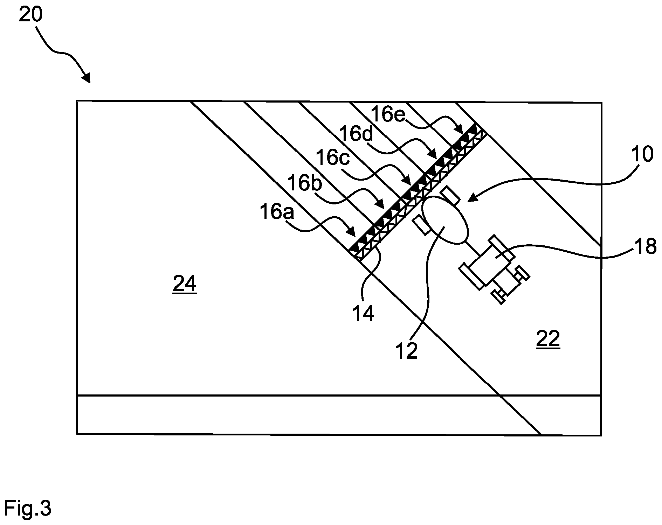

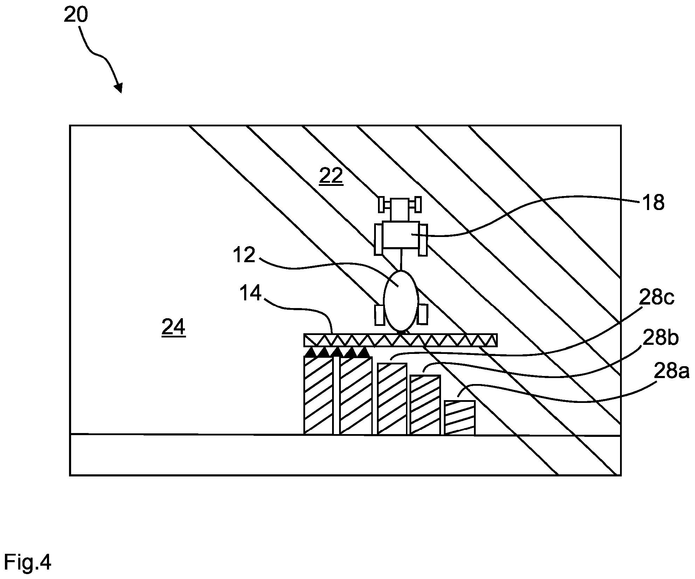

Die Fig. 3 und 4 zeigen einen Ausbringvorgang, bei welchem Mehrfachausbringungen 26a-26c vermieden werden sollen. Ausbringlücken 28a-28c im Übergangsbereich zwischen dem Vorgewende und dem Innenbereich der landwirtschaftlichen Nutzfläche 20 werden hingegen toleriert.

Die in der Fig. 3 dargestellte Materialausbringung erfolgt in gleicher Weise wie die mit Bezug auf die Fig. 1 beschriebene Materialausbringung.

Die Fig. 4 zeigt, dass die Deaktivierungszeitpunkte der einzelnen Ausbringteilbereiche 16a-16e derart ermittelt werden, dass unbeabsichtigte Mehrfachausbringungen 26a-26c vermieden werden. Somit kommt es zur Ausbildung von Ausbringlücken 28a-28c, welche in diesem Beispiel toleriert werden. Die Deaktivierungszeitpunkte der einzelnen Ausbringteilbereiche sind erneut von der Genauigkeit erfasster Positionen des landwirtschaftlichen Ausbringgeräts 10 während des Ausbringens der Spritzflüssigkeit auf den ersten Flächenbereich 22 und den zweiten Flächenbereich 24 der landwirtschaftlichen Nutzfläche 20 und von dem aktuellen fahrdynamischen Zustand des landwirtschaftlichen Ausbringgeräts 10 abhängig.

In der nachfolgenden Anschlussfahrt innerhalb des zweiten Flächenbereichs 24 entlang der benachbarten Fahrgasse erfolgt das Aktivieren der einzelnen Ausbringteilbereiche 16a-16e ebenfalls derart, dass unbeabsichtigte Mehrfachausbringungen 26a-26c vermieden werden. Auch hier werden Ausbringlücken 28a-28c toleriert. Die Aktivierungszeitpunkte der einzelnen Ausbringteilbereiche 16a-16e sind ebenfalls von der Genauigkeit erfasster Positionen des landwirtschaftlichen Ausbringgeräts 10 während des Ausbringens von Spritzflüssigkeit auf den ersten Flächenbereich 22 und den zweiten Flächenbereich 24 der landwirtschaftlichen Nutzfläche 20 und von dem aktuellen fahrdynamischen Zustand des landwirtschaftlichen Ausbringgeräts 10 anhängig.

In den Figuren ist die Ausbringung von Material auf eine landwirtschaftliche Nutzfläche 20 mittels eines landwirtschaftlichen Spritzgeräts dargestellt. Das Verfahren kann in analoger Weise von einem landwirtschaftlichen Streugerät oder einer landwirtschaftlichen Sämaschine ausgeführt werden. Wenn das Verfahren von einem landwirtschaftlichen Streugerät ausgeführt wird, handelt es sich bei dem auf die landwirtschaftliche Nutzfläche 20 auszubringenden Material um Streugut, beispielsweise Dünger. Wenn das Verfahren von einer landwirtschaftlichen Sämaschine ausgeführt wird, handelt es sich bei dem auf die landwirtschaftliche Nutzfläche 20 auszubringenden Material um Saatgut. Entsprechende landwirtschaftliche Ausbringgeräte 10 weisen ebenfalls deaktivierbare und aktivierbare Ausbringteilbereiche auf, sodass auch hier unter Berücksichtigung der Genauigkeit erfasster Positionen des landwirtschaftlichen Ausbringgeräts 10 während des Ausbringens von Material auf die landwirtschaftliche Nutzfläche 20 und/oder in Abhängigkeit des aktuellen fahrdynamischen Zustands des landwirtschaftlichen Ausbringgeräts 10 Deaktivierungszeitpunkte und Aktivierungszeitpunkte der einzelnen Ausbringteilbereiche 16a-16e ermittelt werden können.

### Bezugszeichen

- 10: Ausbringgerät
- 12: Vorratstank
- 14: Spritzgestänge
- 16a-16e: Ausbringteilbereiche
- 18: Zugfahrzeug
- 20: Nutzfläche
- 22: Flächenbereich
- 24: Flächenbereich
- 26a-26c: Mehrfachausbringungen
- 28a-28c: Ausbringlücken

## Patentansprüche

1. Verfahren zum Ausbringen von Material auf eine landwirtschaftliche Nutzfläche (20) mittels eines landwirtschaftlichen Ausbringgeräts (10), mit den Schritten:
- Erfassen der Position des landwirtschaftlichen Ausbringgeräts (10) während des Ausbringens von Material auf die landwirtschaftliche Nutzfläche (20), und
- Deaktivieren einzelner Ausbringteilbereiche (16a-16e) des landwirtschaftlichen Ausbringgeräts (10) während des Ausbringens von Material auf die landwirtschaftliche Nutzfläche (20) zur Vermeidung unbeabsichtigter Mehrfachausbringungen (26a-26c) und/oder Ausbringlücken (28a-28c) auf der landwirtschaftlichen Nutzfläche (20); wobei
die Deaktivierungszeitpunkte der einzelnen Ausbringteilbereiche (16a-16e) von der Genauigkeit erfasster Positionen des landwirtschaftlichen Ausbringgeräts (10) während des Ausbringens von Material auf die landwirtschaftliche Nutzfläche (20) und/oder von einem aktuellen fahrdynamischen Zustand des landwirtschaftlichen Ausbringgeräts (10) abhängig sind,
wobei das Ermitteln der Deaktivierungszeitpunkte der einzelnen Ausbringteilbereiche (16a-16e) unter Berücksichtigung zumindest eines Toleranzwertes erfolgt, welcher ein tolerierbares Ausmaß von Mehrfachausbringungen (26a-26c) oder Ausbringlücken (28a-28c) auf der landwirtschaftlichen Nutzfläche (20) definiert.

2. Verfahren nach Anspruch 1,
**dadurch gekennzeichnet, dass**
- das Erfassen der Position des landwirtschaftlichen Ausbringgeräts (10) während des Ausbringens von Material auf einen ersten Flächenbereich (22) der landwirtschaftlichen Nutzfläche (20) und/oder während des Ausbringens von Material auf einen zweiten Flächenbereich (24) der landwirtschaftlichen Nutzfläche (20), welcher an den ersten Flächenbereich (22) angrenzt, erfolgt;
- das Deaktivieren der einzelnen Ausbringteilbereiche (16a-16e) des landwirtschaftlichen Ausbringgeräts (10) während des Ausbringens von Material auf den ersten Flächenbereich (22) und/oder den zweiten Flächenbereich (24) der landwirtschaftlichen Nutzfläche (20) zur Vermeidung unbeabsichtigter Mehrfachausbringungen (26a-26c) und/oder Ausbringlücken (28a-28c) im Grenzbereich zwischen dem ersten Flächenbereich (22) und dem zweiten Flächenbereich (24) der landwirtschaftlichen Nutzfläche (20) erfolgt; und/oder
- die Deaktivierungszeitpunkte der einzelnen Ausbringteilbereiche (16a-16e) von der Genauigkeit erfasster Positionen des landwirtschaftlichen Ausbringgeräts (10) während des Ausbringens von Material auf den ersten Flächenbereich (22) und/oder den zweiten Flächenbereich (24) der landwirtschaftlichen Nutzfläche (20) abhängig sind.

3. Verfahren nach Anspruch 1 oder 2, ferner umfassend den Schritt:
- Aktivieren einzelner Ausbringteilbereiche (16a-16e) des landwirtschaftlichen Ausbringgeräts (10) während des Ausbringens von Material auf die landwirtschaftliche Nutzfläche (20) zur Vermeidung unbeabsichtigter Mehrfachausbringungen (26a-26c) und/oder Ausbringlücken (28a-28c) auf der landwirtschaftlichen Nutzfläche (20);
**dadurch gekennzeichnet, dass** die Aktivierungszeitpunkte der einzelnen Ausbringteilbereiche (16a-16e) von der Genauigkeit erfasster Positionen des landwirtschaftlichen Ausbringgeräts (10) während des Ausbringens von Material auf die landwirtschaftliche Nutzfläche (20) und/oder von einem aktuellen fahrdynamischen Zustand des landwirtschaftlichen Ausbringgeräts (10) abhängig sind.

4. Verfahren nach Anspruch 3,
**dadurch gekennzeichnet, dass**
- das Aktivieren der einzelnen Ausbringteilbereiche (16a-16e) des landwirtschaftlichen Ausbringgeräts (10) während des Ausbringens von Material auf einen ersten Flächenbereich (22) und/oder einen zweiten Flächenbereich (24) der landwirtschaftlichen Nutzfläche (20) zur Vermeidung unbeabsichtigter Mehrfachausbringungen (26a-26c) und/oder Ausbringlücken (28a-28c) im Grenzbereich zwischen dem ersten Flächenbereich (22) und dem zweiten Flächenbereich (24) der landwirtschaftlichen Nutzfläche (20) erfolgt; und/oder
- die Aktivierungszeitpunkte der einzelnen Ausbringteilbereiche (16a-16e) von der Genauigkeit erfasster Positionen des landwirtschaftlichen Ausbringgeräts (10) während des Ausbringens von Material auf den ersten Flächenbereich (22) und/oder den zweiten Flächenbereich (24) der landwirtschaftlichen Nutzfläche (20) abhängig sind.

5. Verfahren nach einem der vorstehenden Ansprüche,
**gekennzeichnet durch** den Schritt:
- Erfassen des aktuellen fahrdynamischen Zustands des landwirtschaftlichen Ausbringgeräts (10), insbesondere durch einen oder mehrere Sensoren des landwirtschaftlichen Ausbringgeräts (10).

6. Verfahren nach Anspruch 5, **dadurch gekennzeichnet, dass** das Erfassen des aktuellen fahrdynamischen Zustands des landwirtschaftlichen Ausbringgeräts das Erfassen des aktuellen längsdynamischen Zustands und/oder das Erfassen des aktuellen querdynamischen Zustands des landwirtschaftlichen Ausbringgeräts umfasst.

7. Verfahren nach Anspruch 6, **dadurch gekennzeichnet, dass** das Erfassen des aktuellen querdynamischen Zustands durch Erfassen einer Gierrate und/oder einer Gierbeschleunigung des landwirtschaftlichen Ausbringgeräts um eine Hochachse, einer Geschwindigkeit des landwirtschaftlichen Ausbringgeräts in Querrichtung und/oder einer Beschleunigung des landwirtschaftlichen Ausbringgeräts in Querrichtung erfolgt.

8. Verfahren nach einem der vorstehenden Ansprüche,
**dadurch gekennzeichnet, dass** das Ermitteln der Aktivierungszeitpunkte der einzelnen Ausbringteilbereiche (16a-16e) unter Berücksichtigung des zumindest einen Toleranzwertes oder zumindest eines weiteren Toleranzwertes erfolgt, welcher ein tolerierbares Ausmaß von Mehrfachausbringungen (26a-26c) oder Ausbringlücken (28a-28c) auf der landwirtschaftlichen Nutzfläche (20) definiert.

9. Verfahren nach einem der vorstehenden Ansprüche,
**gekennzeichnet durch** den Schritt:
- Ermitteln der Positionen der einzelnen Ausbringteilbereiche (16a-16e) des landwirtschaftlichen Ausbringgeräts (10) während des Ausbringens von Material auf die landwirtschaftliche Nutzfläche (20);
wobei die Deaktivierungszeitpunkte und/oder die Aktivierungszeitpunkte der einzelnen Ausbringteilbereiche (16a-16e) von ermittelten Positionen der einzelnen Ausbringteilbereiche (16a-16e) des landwirtschaftlichen Ausbringgeräts (10) während des Ausbringens von Material auf die landwirtschaftliche Nutzfläche (20) abhängig sind.

10. Verfahren nach Anspruch 9,
**dadurch gekennzeichnet, dass**
- das Ermitteln der Positionen der einzelnen Ausbringteilbereiche (16a-16e) des landwirtschaftlichen Ausbringgeräts (10) während des Ausbringens von Material auf den ersten Flächenbereich (22) und/oder den zweiten Flächenbereich (24) der landwirtschaftlichen Nutzfläche (20) erfolgt; und/oder
- die Deaktivierungszeitpunkte und/oder die Aktivierungszeitpunkte der einzelnen Ausbringteilbereiche (16a-16e) von ermittelten Positionen der einzelnen Ausbringteilbereiche (16a-16e) des landwirtschaftlichen Ausbringgeräts (10) während des Ausbringens von Material auf den ersten Flächenbereich (22) und/oder den zweiten Flächenbereich (24) der landwirtschaftlichen Nutzfläche (20) abhängig sind.

11. Verfahren nach Anspruch 9 oder 10,
**dadurch gekennzeichnet, dass** die Deaktivierungszeitpunkte und/oder Aktivierungszeitpunkte der einzelnen Ausbringteilbereiche (16a-16e) außerdem von der Genauigkeit ermittelter Positionen der einzelnen Ausbringteilbereiche (16a-16e) des landwirtschaftlichen Ausbringgeräts (10) während des Ausbringens von Material auf die landwirtschaftliche Nutzfläche (20) abhängig sind.

12. Verfahren nach Anspruch 11,
**dadurch gekennzeichnet, dass** die Deaktivierungszeitpunkte und/oder Aktivierungszeitpunkte der einzelnen Ausbringteilbereiche (16a-16e) von der Genauigkeit der ermittelten Positionen der einzelnen Ausbringteilbereiche (16a-16e) des landwirtschaftlichen Ausbringgeräts (10) während des Ausbringens von Material auf den ersten Flächenbereich (22) und/oder den zweiten Flächenbereich (24) der landwirtschaftlichen Nutzfläche (20) abhängig sind.

13. Verfahren nach einem der vorstehenden Ansprüche,
**dadurch gekennzeichnet, dass** die Deaktivierungszeitpunkte und/oder Aktivierungszeitpunkte der einzelnen Ausbringteilbereiche (16a-16e) von der Deaktivierungsträgheit und/oder der Aktivierungsträgheit des landwirtschaftlichen Ausbringgeräts (10) abhängig sind.

14. Landwirtschaftliches Ausbringgerät (10) zum Ausbringen von Material auf eine landwirtschaftliche Nutzfläche (20), mit:
- einer Positionserfassungseinrichtung, welche dazu eingerichtet ist, die Position des landwirtschaftlichen Ausbringgeräts (10) während des Ausbringens von Material auf die landwirtschaftliche Nutzfläche (20) erfassen; und
- einer Teilbereichsschaltung, welche dazu eingerichtet ist, einzelne Ausbringteilbereiche (16a-16e) während des Ausbringens von Material auf die landwirtschaftliche Nutzfläche (20) zu deaktivieren, um unbeabsichtigte Mehrfachausbringungen (26a-26c) und/oder Ausbringlücken (28a-28c) auf der landwirtschaftlichen Nutzfläche (20) zu vermeiden; wobei
eine Steuerungseinrichtung dazu eingerichtet ist zu bewirken, dass das landwirtschaftliche Ausbringgerät (10) das Verfahren nach einem der Ansprüche 1 bis 13 ausführt.

## Claims

1. Method for applying material to agriculturally productive land (20) by means of an agricultural application apparatus (10), having the steps of:
- detecting the position of the agricultural application apparatus (10) while material is applied to the agriculturally productive land (20), and
- deactivating individual application sub-regions (16a-16e) of the agricultural application apparatus (10) while material is applied to the agriculturally productive land (20) in order to avoid multiple unintentional applications (26a-26c) and/or application gaps (28a-28c) on the agriculturally productive land (20); wherein
the deactivation times of the individual application sub-regions (16a-16e) are dependent on the accuracy of detected positions of the agricultural application apparatus (10) while material is applied to the agriculturally productive land (20) and/or on a current driving dynamic state of the agricultural application apparatus (10),
wherein the deactivation times of the individual application sub-regions (16a-16e) are determined by taking into account at least one tolerance value which defines a tolerable extent of multiple applications (26a-26c) or application gaps (28a-28c) on the agriculturally productive land (20).

2. Method according to claim 1,
**characterized in that**
- the position of the agricultural application apparatus (10) is detected while material is applied to a first land region (22) of the agriculturally productive land (20) and/or while material is applied to a second land region (24) of the agriculturally productive land (20) adjoining the first land region (22);
- the individual application sub-regions (16a-16e) of the agricultural application apparatus (10) are deactivated while material is applied to the first land region (22) and/or the second land region (24) of the agriculturally productive land (20) in order to avoid multiple unintentional applications (26a-26c) and/or application gaps (28a-28c) in the boundary region between the first land region (22) and the second land region (24) of the agriculturally productive land (20); and/or
- the deactivation times of the individual application sub-regions (16a-16e) are dependent on the accuracy of detected positions of the agricultural application apparatus (10) while material is applied to the first land region (22) and/or the second land region (24) of the agriculturally productive land (20).

3. Method according to either claim 1 or claim 2, further comprising the step of:
- activating individual application sub-regions (16a-16e) of the agricultural application apparatus (10) while material is applied to the agriculturally productive land (20) in order to avoid multiple unintentional applications (26a-26c) and/or application gaps (28a-28c) on the agriculturally productive land (20);
**characterized in that** the activation times of the individual application sub-regions (16a-16e) are dependent on the accuracy of detected positions of the agricultural application apparatus (10) while material is applied to the agriculturally productive land (20) and/or on a current driving dynamic state of the agricultural application apparatus (10).

4. Method according to claim 3,
**characterized in that**
- the individual application sub-regions (16a-16e) of the agricultural application apparatus (10) are activated while material is applied to a first land region (22) and/or a second land region (24) of the agriculturally productive land (20) in order to avoid multiple unintentional applications (26a-26c) and/or application gaps (28a-28c) in the boundary region between the first land region (22) and the second land region (24) of the agriculturally productive land (20); and/or
- the activation times of the individual application sub-regions (16a-16e) are dependent on the accuracy of detected positions of the agricultural application apparatus (10) while material is applied to the first land region (22) and/or the second land region (24) of the agriculturally productive land (20).

5. Method according to any of the preceding claims,
**characterized by** the step of:
- detecting the current driving dynamic state of the agricultural application apparatus (10), in particular by means one or more sensors of the agricultural application apparatus (10).

6. Method according to claim 5, **characterized in that** detecting the current driving dynamic state of the agricultural application apparatus comprises detecting the current longitudinal dynamic state and/or detecting the current transverse dynamic state of the agricultural application apparatus.

7. Method according to claim 6, **characterized in that** the current transverse dynamic state is detected by detecting a yaw rate and/or a yaw acceleration of the agricultural application apparatus about a vertical axis, a speed of the agricultural application apparatus in the transverse direction and/or an acceleration of the agricultural application apparatus in the transverse direction.

8. Method according to any of the preceding claims,
**characterized in that** the activation times of the individual application sub-regions (16a-16e) are determined by taking into account at least one tolerance value or at least a further tolerance value which defines a tolerable extent of multiple applications (26a-226c) or application gaps (28a-228c) on the agriculturally productive land (20).

9. Method according to any of the preceding claims,
**characterized by** the step of:
- determining the positions of the individual application sub-regions (16a-16e) of the agricultural application apparatus (10) while material is applied to the agriculturally productive land (20);
the deactivation times and/or the activation times of the individual application sub-regions (16a-16e) being dependent on determined positions of the individual application sub-regions (16a-16e) of the agricultural application apparatus (10) while material is applied to the agriculturally productive land (20).

10. Method according to claim 9,
**characterized in that**
- the positions of the individual application sub-regions (16a-16e) of the agricultural application apparatus (10) are determined while material is applied to the first land region (22) and/or the second land region (24) of the agriculturally productive land (20); and/or
- the deactivation times and/or the activation times of the individual application sub-regions (16a-16e) are dependent on determined positions of the individual application sub-regions (16a-16e) of the agricultural application apparatus (10) while material is applied to the first land region (22) and/or the second land region (24) of the agriculturally productive land (20).

11. Method according to either claim 9 or claim 10,
**characterized in that** the deactivation times and/or activation times of the individual application sub-regions (16a-16e) are also dependent on the accuracy of determined positions of the individual application sub-regions (16a-16e) of the agricultural application apparatus (10) while material is applied to the agriculturally productive land (20).

12. Method according to claim 11,
**characterized in that** the deactivation times and/or activation times of the individual application sub-regions (16a-16e) are dependent on the accuracy of the determined positions of the individual application sub-regions (16a-16e) of the agricultural application apparatus (10) while material is applied to the first land region (22) and/or the second land region (24) of the agriculturally productive land (20).

13. Method according to any of the preceding claims,
**characterized in that** the deactivation times and/or activation times of the individual application sub-regions (16a-16e) are dependent on the deactivation time lag and/or the activation time lag of the agricultural application apparatus (10).

14. Agricultural application apparatus (10) for applying material to an agriculturally productive land (20), having:
- a position detection device which is designed to detect the position of the agricultural application apparatus (10) while material is applied to the agriculturally productive land (20); and
- a sub-region circuit which is designed to deactivate individual application sub-regions (16a-16e) while material is applied to the agriculturally productive land (20) in order to avoid multiple unintentional applications (26a-26c) and/or application gaps (28a-28c) on the agriculturally productive land (20); wherein
a control device is designed to cause the agricultural application apparatus (10) to carry out the method according to any of claims 1 to 13.

## Revendications

1. Procédé permettant l'épandage de matière sur une surface utile agricole (20) à l'aide d'un appareil d'épandage agricole (10), comportant les étapes :
- de détection de la position de l'appareil d'épandage agricole (10) pendant l'épandage de matière sur la surface utile agricole (20), et
- de désactivation de différentes zones partielles d'épandage (16a-16e) de l'appareil d'épandage agricole (10) pendant l'épandage de matière sur la surface utile agricole (20) afin d'éviter des épandages multiples (26a-26c) et/ou des failles d'épandage (28a-28c) involontaires sur la surface utile agricole (20) ; dans lequel
les moments de désactivation des différentes zones partielles d'épandage (16a-16e) dépendent de l'exactitude de positions détectées de l'appareil d'épandage agricole (10) pendant l'épandage de matière sur la surface utile agricole (20) et/ou d'un état dynamique de conduite réel de l'appareil d'épandage agricole (10),
dans lequel la détermination des moments de désactivation des différentes zones partielles d'épandage (16a-16e) s'effectue en tenant compte d'au moins une valeur de tolérance qui définit un nombre tolérable d'épandages multiples (26a-26c) ou de failles d'épandage (28a-28c) sur la surface utile agricole (20).

2. Procédé selon la revendication 1,
**caractérisé en ce que**
- la détection de la position de l'appareil d'épandage agricole (10) s'effectue pendant l'épandage de matière sur une première zone de surface (22) de la surface utile agricole (20) et/ou pendant l'épandage de matière sur une seconde zone de surface (24) de la surface utile agricole (20), laquelle seconde zone de surface est adjacente à la première zone de surface (22) ;
- la désactivation des différentes zones partielles d'épandage (16a-16e) de l'appareil d'épandage agricole (10) s'effectue pendant l'épandage de matière sur la première zone de surface (22) et/ou la seconde zone de surface (24) de la surface utile agricole (20) afin d'éviter des épandages multiples (26a-26c) et/ou des failles d'épandage (28a-28c) involontaires dans la zone limite entre la première zone de surface (22) et la seconde zone de surface (24) de la surface utile agricole (20) ; et/ou
- les moments de désactivation des différentes zones partielles d'épandage (16a-16e) dépendent de l'exactitude de positions détectées de l'appareil d'épandage agricole (10) pendant l'épandage de matière sur la première zone de surface (22) et/ou la seconde zone de surface (24) de la surface utile agricole (20).

3. Procédé selon la revendication 1 ou 2, comprenant en outre l'étape :
- d'activation de différentes zones partielles d'épandage (16a-16e) de l'appareil d'épandage agricole (10) pendant l'épandage de matière sur la surface utile agricole (20) afin d'éviter des épandages multiples (26a-26c) et/ou des failles d'épandage (28a-28c) involontaires sur la surface utile agricole (20) ;
**caractérisé en ce que** les moments d'activation des différentes zones partielles d'épandage (16a-16e) dépendent de l'exactitude de positions détectées de l'appareil d'épandage agricole (10) pendant l'épandage de matière sur la surface utile agricole (20) et/ou d'un état dynamique de conduite réel de l'appareil d'épandage agricole (10).

4. Procédé selon la revendication 3,
**caractérisé en ce que**
- l'activation des différentes zones partielles d'épandage (16a-16e) de l'appareil d'épandage agricole (10) s'effectue pendant l'épandage de matière sur une première zone de surface (22) et/ou une seconde zone de surface (24) de la surface utile agricole (20) afin d'éviter des épandages multiples (26a-26c) et/ou des failles d'épandage (28a-28c) involontaires dans la zone limite entre la première zone de surface (22) et la seconde zone de surface (24) de la surface utile agricole (20) ; et/ou
- les moments d'activation des différentes zones partielles d'épandage (16a-16e) dépendent de l'exactitude de positions détectées de l'appareil d'épandage agricole (10) pendant l'épandage de matière sur la première zone de surface (22) et/ou la seconde zone de surface (24) de la surface utile agricole (20).

5. Procédé selon l'une des revendications précédentes,
**caractérisé par** l'étape :
- de détection de l'état dynamique de conduite réel de l'appareil d'épandage agricole (10), en particulier par un ou plusieurs capteurs de l'appareil d'épandage agricole (10).

6. Procédé selon la revendication 5, **caractérisé en ce que** la détection de l'état dynamique de conduite réel de l'appareil d'épandage agricole comprend la détection de l'état dynamique longitudinal réel et/ou la détection de l'état dynamique transversal réel de l'appareil d'épandage agricole.

7. Procédé selon la revendication 6, **caractérisé en ce que** la détection de l'état dynamique transversal réel s'effectue par la détection d'une vitesse de lacet et/ou d'une accélération de lacet de l'appareil d'épandage agricole autour d'un axe vertical, d'une vitesse de l'appareil d'épandage agricole dans la direction transversale et/ou d'une accélération de l'appareil d'épandage agricole dans la direction transversale.

8. Procédé selon l'une des revendications précédentes,
**caractérisé en ce que** la détermination des moments d'activation des différentes zones partielles d'épandage (16a-16e) s'effectue en tenant compte de l'au moins une valeur de tolérance ou d'au moins une valeur de tolérance supplémentaire qui définit un nombre tolérable d'épandages multiples (26a-26c) ou de failles d'épandage (28a-28c) sur la surface utile agricole (20).

9. Procédé selon l'une des revendications précédentes,
**caractérisé par** l'étape :
- de détermination des positions des différentes zones partielles d'épandage (16a-16e) de l'appareil d'épandage agricole (10) pendant l'épandage de matière sur la surface utile agricole (20) ;
dans lequel les moments de désactivation et/ou les moments d'activation des différentes zones partielles d'épandage (16a-16e) dépendent de positions déterminées des différentes zones partielles d'épandage (16a-16e) de l'appareil d'épandage agricole (10) pendant l'épandage de matière sur la surface utile agricole (20).

10. Procédé selon la revendication 9,
**caractérisé en ce que**
- la détermination des positions des différentes zones partielles d'épandage (16a-16e) de l'appareil d'épandage agricole (10) s'effectue pendant l'épandage de matière sur la première zone de surface (22) et/ou la seconde zone de surface (24) de la surface utile agricole (20) ; et/ou
- les moments de désactivation et/ou les moments d'activation des différentes zones partielles d'épandage (16a-16e) dépendent de positions déterminées des différentes zones partielles d'épandage (16a-16e) de l'appareil d'épandage agricole (10) pendant l'épandage de matière sur la première zone de surface (22) et/ou la seconde zone de surface (24) de la surface utile agricole (20).

11. Procédé selon la revendication 9 ou 10,
**caractérisé en ce que** les moments de désactivation et/ou les moments d'activation des différentes zones partielles d'épandage (16a-16e) dépendent en outre de l'exactitude de positions déterminées des différentes zones partielles d'épandage (16a-16e) de l'appareil d'épandage agricole (10) pendant l'épandage de matière sur la surface utile agricole (20).

12. Procédé selon la revendication 11,
**caractérisé en ce que** les moments de désactivation et/ou les moments d'activation des différentes zones partielles d'épandage (16a-16e) dépendent de l'exactitude des positions déterminées des différentes zones partielles d'épandage (16a-16e) de l'appareil d'épandage agricole (10) pendant l'épandage de matière sur la première zone de surface (22) et/ou la seconde zone de surface (24) de la surface utile agricole (20).

13. Procédé selon l'une des revendications précédentes,
**caractérisé en ce que** les moments de désactivation et/ou les moments d'activation des différentes zones partielles d'épandage (16a-16e) dépendent de la lenteur de désactivation et/ou de la lenteur d'activation de l'appareil d'épandage agricole (10).

14. Appareil d'épandage agricole (10) permettant l'épandage de matière sur une surface utile agricole (20), comportant :
- un dispositif de détection de position configuré pour détecter la position de l'appareil d'épandage agricole (10) pendant l'épandage de matière sur la surface utile agricole (20) ; et
- une commutation de zone partielle configurée pour désactiver différentes zones partielles d'épandage (16a-16e) pendant l'épandage de matière sur la surface utile agricole (20) afin d'éviter des épandages multiples (26a-26c) et/ou des failles d'épandage (28a-28c) involontaires sur la surface utile agricole (20) ; dans lequel
un dispositif de commande est configuré de manière à amener l'appareil d'épandage agricole (10) à exécuter le procédé selon l'une des revendications 1 à 13.
